# EUROPEAN PATENT APPLICATION

(11) **EP 1 672 641 A1**
(43) Date of publication of application: **21.06.2006**
(21) Application number: 05257820.0
(22) Date of filing: 19.12.2005
(51) Int. Cl.: G11B 33/12, G11B 25/10

(54) **Video recording and reproducing apparatus**

(30) Priority: 20.12.2004 JP 2004367520
(71) Applicant: ORION ELECTRIC CO., Ltd., Fukui 915-8555 (JP)
(72) Inventor: Tokuda, Takashi c/o Orion Electric Co, Ltd, Echizen-city Fukui 915-8555 (JP)
(74) Representative: Paget, Hugh Charles Edward

(57) **Abstract**

To change a position of a control board against a frame of an optical disk drive unit so that an output terminal, etc., mounted on the control board can contact a backplane of a housing of a different depth dimension. Locating pins 25 and a locking nail 27 are formed as an engagement portion on a frame 18. As an engagement receiving portion of the locating pins 25 and the locking nail 27, there are two sets of locating holes 30, 30A, locking holes 31, 31A and insertion holes 33, 33A of screws 32 provided with spacing before and after on a control board 17. A mounting position of the control board 17 on the frame 18 can be changed by selecting which of the locating holes 30, 30A and the locking holes 31, 31A are to be engaged with the locating pins 25 and the locking nail 27.

## Description

### BACKGROUND OF THE INVENTION

### Field of the Invention

The present invention relates to a video reproducing apparatus having a control board placed horizontally and fixed on a top surface of a frame of an optical disk drive unit, and in particular, to the video reproducing apparatus suitable for, on placing the optical disk drive unit in a housing of a different depth dimension, changing a mounting position of the control board to fit a backplane of the housing of a different depth dimension.

### Description of the Related Art

In recent years, a large-capacity recording and reproducing device such as an optical disk is put into practical use. As a composite video reproducing device comprising an optical disk drive unit using such an optical disk and a conventional video cassette recording and reproducing device, the applicant hereof proposes in Japanese Patent Laid-Open Publication No. 2004-280976 (Patent Document 1) a composite video reproducing device which is provided with both the optical disk drive unit and a video cassette drive unit and has housed in its housing a DVD control board and a VCR control board for controlling the drive units and a power supply circuit board for supplying power to these boards. As for the composite video reproducing device shown in the Patent Document 1, a main board having integrated the VCR control board and power supply circuit board is placed between the video cassette drive unit and a bottom of the housing, and the DVD control board is placed between the optical disk drive unit and the bottom of the housing. The applicant hereof also proposes a video reproducing device having the DVD control board mounted in parallel on a top surface of a frame of the optical disk drive unit in Japanese Patent Application No. 2004-161579 and so on in consideration of workability of maintenance such as adjustment of a pickup lens of the optical disk drive unit.

In the case of shipping a composite video reproducing device comprising an optical disk drive unit and a video cassette recording and reproducing device overseas, a depth dimension of its housing is different depending on areas for shipment, such as specifications for Europe and specifications for the U.S.A. for instance, even if they are models of substantially the same performance. To be more specific, a sound-multiplex system is different between the U.K. and France, and a color system and so on is different between Germany and France for instance. Therefore, in the case of the specifications for Europe, they are made capable of meeting the specifications of European countries by changing ICs mounted on a main board correspondingly to the European countries or changing circuit configuration of the main board. As for the specifications for the U.S.A., it is necessary to meet just one broadcast system. Thus, the specifications for Europe require a larger main board than the specifications for the U.S.A. For this reason, the specifications for Europe inevitably have a larger depth of the housing of the composite video reproducing device. In recent years, the optical disk drive unit uses an output terminal of HDMI (High Definition Multimedia Interface) specifications capable of sending and receiving video, sound and control signals together with one cable as the output terminal. Such an output terminal of the HDMI specifications is directly mounted on a DVD control board for the purposes of avoiding routing of a useless pattern in order to curb influence of noise to the minimum. Thus, in the case of mounting the DVD control board on a top surface of a frame of the optical disk drive unit and mounting the output terminal on the DVD control board, the output terminal mounted on the DVD control board is led outside while facing an opening provided on a backplane of the housing. Therefore, as the depth dimension of the housing is different depending on a destination as previously described, it becomes difficult to mount the control board because the control board interferes with the backplane of the housing when mounting it on the housing for the U.S.A. of a small depth in the case where the DVD control board having the output terminal of the HDMI specifications of the frame of the optical disk drive unit is already positioned in compliance with a housing size for Europe of the large depth. Inversely, if the DVD control board is positioned in compliance with the housing for the U.S.A., there is an inconvenience arising to connection to the output terminal in the case of the specifications for Europe because there is space between the output terminal and the backplane of the housing. For this reason, the specifications for Europe and specifications for the U.S.A. are met by changing the position of the DVD control board against the frame accordingly. Therefore, it is necessary to form the DVD control board in compliance with the specifications of each individual country so that there is a problem of being unable to render the DVD control board common and increasing cost.

### SUMMARY OF THE INVENTION

The present invention has been made in view of the problem, and an object thereof is to provide a video reproducing apparatus capable of changing a position of a control board simply and easily against a frame of an optical disk drive unit and putting an output terminal and so on mounted on the control board in contact with a backplane of a housing of a different depth dimension.

A video recording and reproducing device according to claim 1 of the present invention is the one for housing at least the optical disk drive unit and a control board of the optical disk drive unit in a housing, placing the control board, preferably horizontally, on a surface of a frame of the optical disk drive unit and engaging an engagement receiving portion formed on the control board with an engagement portion formed on the frame to position the control board against the frame, characterized in that the control board is provided with multiple sets of engagement receiving portions alongside with spacing forward and backward so that a mounting position of the control board on the frame can be changed by selecting one of the multiple engagement receiving portions and engaging it with the engagement portion.

According to the configuration of claim 1, it is possible to change the mounting position of the control board mounted on the frame forward and backward by changing the position of the engagement receiving portion formed on the control board against the engagement portion formed on the frame.

The video recording and reproducing device according to claim 2 of the present invention is the one according to claim 1, characterized in that an output terminal is connected to a back end portion of the control board and the engagement receiving portion of the control board for the engagement portion of the frame is selected so that the output terminal can contact backplanes of multiple housings of different depth dimensions.

According to the configuration of claim 2, even in the case where the depth dimension of the housing is different depending on a destination of export, it is possible to select the engagement receiving portion formed on the control board against the engagement portion formed on the frame forward or backward so as to lead the output terminal fixed on the back end portion of the control board outside in contact with the backplane of the housing irrespective of the depth dimension of the housing.

The video recording and reproducing device according to claim 3 of the present invention is the one according to claim 1 or 2, characterized in that the frame comprises a pair of right and left side wall portions and a clamper supporting portion installed between upper ends of the side wall portions, a locating rib with a screw hall and a locating pin is projected and formed as the engagement portion on the top surface of the frame, a locking nail is formed on the clamper supporting portion, and a locating hole and a locking hole engageable with the locating pin and the locking nail are formed as the engagement receiving portion on the control board.

According to the configuration of claim 3, it is possible to change the mounting position of the control board against the frame forward and backward by displacing the locating hole and locking hole engaged with the locating pin and locking nail formed on the frame forward and backward.

The video recording and reproducing device according to claim 4 of the present invention is the one according to any one of claims 1 to 3, characterized in that the optical disk drive unit and a video cassette drive unit are housed in the housing.

According to the configuration of claim 4, as to a composite video recording and reproducing device comprising the optical disk drive unit and video cassette drive unit, there are differences in size of a main board having control circuit of the video cassette drive unit and power supply circuit board for supplying power to the optical disk drive unit and video cassette drive unit depending on specifications of a destination of export. Consequently, the depth dimension of the housing is different correspondingly to the size of the main board. Even in the case where the depth dimension of the housing is different, however, it is possible to render the control board of the optical disk drive unit common by changing the mounting position of the control board against the frame forward and backward.

### BRIEF DESCRIPTION OF THE DRAWINGS

FIG. 1 is a plan view of an optical disk drive unit of the present invention.
FIG. 2 is an exploded perspective view of the optical disk drive unit and a control board of the present invention.
FIG. 3 is an exploded perspective view of the optical disk drive unit of the present invention.
FIG. 4 is a sectional view of the optical disk drive unit having the control board mounted thereon according to the present invention.
FIG. 5 is a sectional view of the optical disk drive unit having the control board mounted thereon showing a state of having a mounting position of the control board displaced backward from the state of FIG. 4 according to the present invention.

### DETAILED DESCRIPTION OF THE PREFERRED EMBODIMENTS

Hereunder, a concrete embodiment of the present invention will be described by referring to the drawings. The following embodiment is just one form for embodying the present invention and does not limit the present invention within its scope.

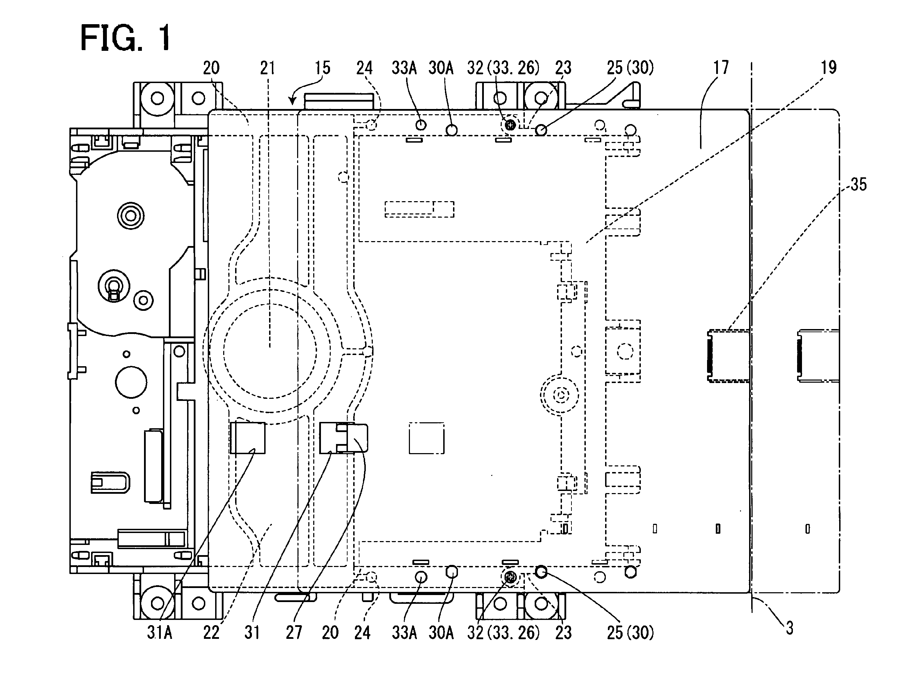

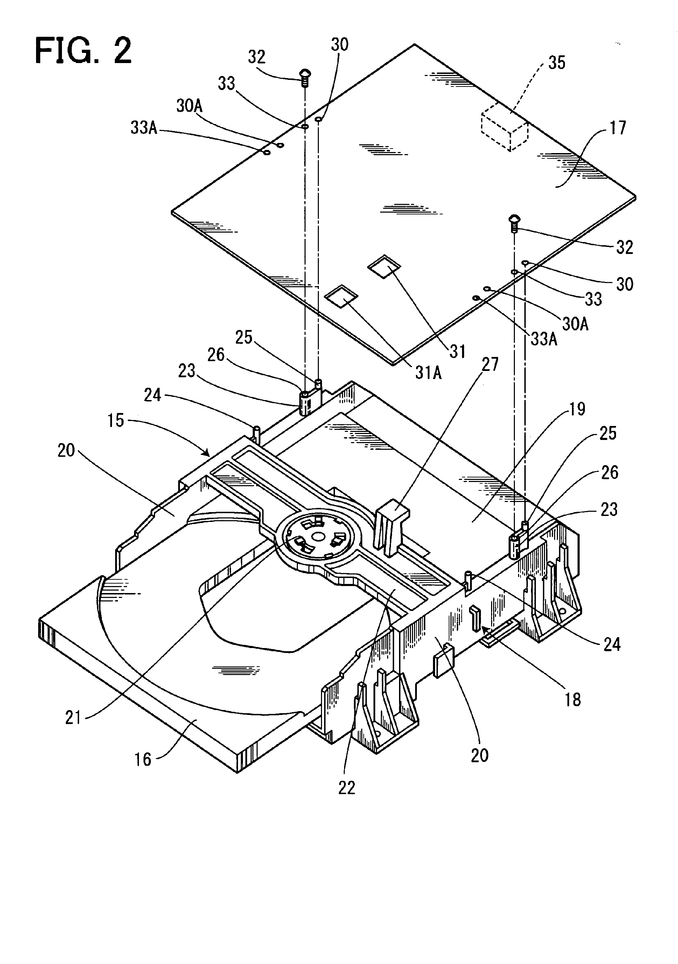

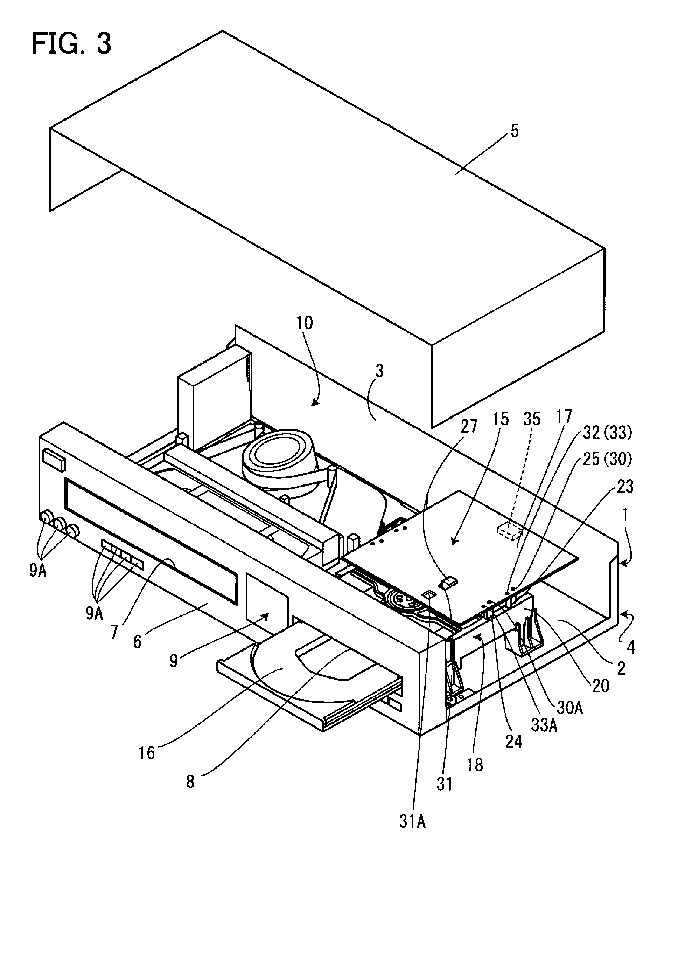

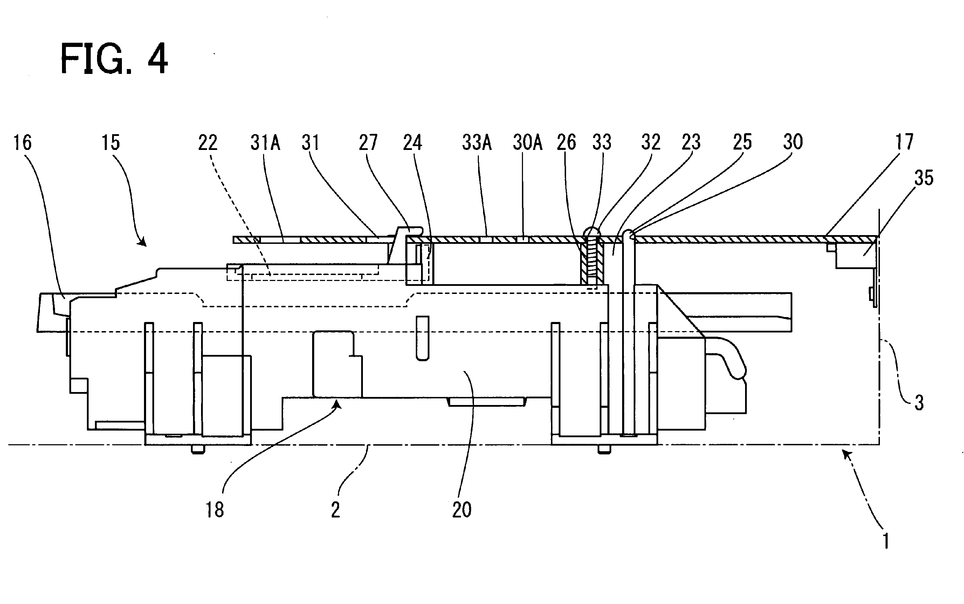

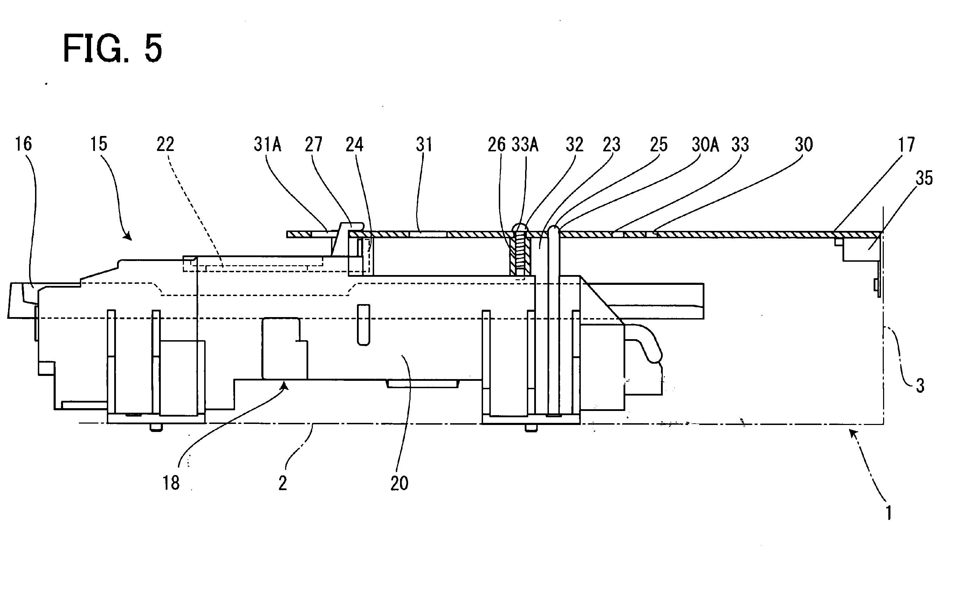

This embodiment will be described by taking as an example the case of applying it to a composite video recording and reproducing apparatus comprising both a video cassette drive unit and an optical disk drive unit as a video recording and reproducing apparatus. FIG. 1 is a plan view of the optical disk drive unit; FIG. 2 is an exploded perspective view of the optical disk drive unit and a control board; FIG. 3 is an exploded perspective view of a video recording and reproducing apparatus; and FIGS. 4 and 5 are sectional views showing a mounting state of the optical disk drive unit and control board, where FIG. 4 shows a state in which a mounting position of the control board against the optical disk drive unit is on a front side, and FIG. 5 shows a state in which the mounting position of the control board against the optical disk drive unit is on a back front side. As shown in the drawings, a video cassette drive unit 10 and an optical disk drive unit 15 are placed alongside inside a housing 1. The housing 1 is configured by a lower frame 4 having bent a backplane 3 from a posterior margin of a bottom plate 2, a U-shaped cover 5 covering the lower frame 4 and a front panel 6 screwed on the front of the lower frame 4. A video cassette inserting portion 7 and an optical disk inserting portion 8 are placed alongside approximately at the same height on the front panel 6. The front panel 6 has a display portion 9 and various operating switches 9A placed thereon. Though not shown, the housing 1 has a main board having a control circuit of the video cassette drive unit 10 and a power supply circuit board for supplying power to the control board of the optical disk drive unit 15 described later placed therein, where the video cassette drive unit 10 and optical disk drive unit 15 are fixed on the main board.

The optical disk drive unit 15 comprises a tray 16 for mounting a disk thereon and carrying the disk to a turn table not shown. It also comprises the turn table for rotating the disk on reading a video signal and a sound signal stored on the disk with a pickup lens though not shown, a clamper 21 for tightly holding the disk together with the turn table, and a control board 17 for controlling driving of the optical disk drive unit 15 and also controlling the sound signal and video signal. These components are mounted on a frame 18 of the optical disk drive unit 15 so as to unitize them integrally.

The frame 18 is configured by integrally forming a synthetic resin, and comprises a base frame 19 extended horizontally and side wall portions 20, 20 integrally formed on both the right and left sides of the base frame 19, where the pickup lens and these drive mechanisms are fixed facing an opening formed on the base frame 19 and the tray 16 is moved forward and backward against the frame 18 by a guide mechanism formed on an inner surface of the side wall portion 20. The turn table for rotating the disk is placed approximately at the center of the frame 18 to integrally install a band-plate-like clamper supporting portion 22 positioned above the turn table and having the clamper 21 mounted between the side wall portions 20 of the frame 18.

As shown in FIG. 2 and so on, the control board 17 is fixed on the frame 18 by being set on top surfaces of the right and left side wall portions 20, and multiple mounting pins 24 are projected on the top surfaces of the side wall portions 20, 20 and clamper supporting portion 22 of the frame 18 in order to mount the control board 17. On the side wall portions 20, 20, a pair of right and left locating ribs 23 including locating pins 25 and screw holes 26 for fixing the control board 17 as the engagement portions are formed. Furthermore, an L-shaped locking nail 27 for positioning the control board 17 on the clamper supporting portion 22 is integrally formed thereon. On the control board 17 to be fixed, locating holes 30, 30A and locking holes 31, 31A to be engaged with the locating pins 25 and the locking nail 27 and insertion holes 33, 33A of screws 32 corresponding to the screw holes 26 are provided with spacing before and after. To be more specific, the control board 17 has two sets of the locking holes 31, 31A and the locating holes 30, 30A and the insertion holes 33, 33A of screws 32 placed alongside by being displaced forward and backward. To fix the control board 17 on the front of the frame 18, the locating holes 30A and locking hole 31A located on the front are engaged with the locating pins 25 and the locking nail 27, and the screws 32 are turned and fastened from the insertion holes 33A to the screw holes 26 to have the control board 17 fixed. To fix the control board 17 on the back side of the frame 18, the locating holes 30 and locking hole 31 located on the back side are engaged with the locating pins 25 and the locking nail 27, and the screws 32 are turned and fastened from the insertion holes 33 to the screw holes 26 to have the control board 17 fixed.

As described above, the locating pins 25 and the locking nail 27 are formed as an engagement portion on the frame 18. As an engagement receiving portion, two sets of the locating holes 30, 30A, locking holes 31, 31A and insertion holes 33, 33A of the screws 32 are provided with spacing before and after. Thus, the mounting position of the control board 17 on the frame 18 can be changed forward and backward depending on which of the locating holes 30, 30A and the locking holes 31, 31A are to be engaged with the locating pins 25 and the locking nail 27. To be more specific, an output terminal 35 of the HDMI specifications is mounted on the back side of the control board 17, where the output terminal 35 needs to be led outside while facing an opening (not shown) formed on the backplane 3 of the housing 1 by hitting the backplane 3. A depth dimension of the housing 1 is different depending on a destination of shipment, such as a difference between the specifications for the U.S.A. and the specifications for Europe, and so the specifications for Europe have a larger depth dimension of the housing 1 due to the size of the main board and so on. For this reason, in the case where the depth dimension of the housing 1 is small such as the one for the U.S.A., the locating pins 25 projecting from the locating ribs 23 are inserted into the locating holes 30 formed on the back side of the control board 17 as shown in FIG. 4, and the L-shaped locking nail 27 formed on the clamper supporting portion 22 is hooked on the locking hole 31 to fasten the screws 32 put through the insertion holes 33 of the control board 17 in the screw holes 26 formed on the locating ribs 23 in a state of having the control board 17 positioned against the frame 18 so as to fix the control board 17 on the frame 18. In the case where the depth dimension of the housing 1 is large such as the one for Europe, the locating pins 25 projected from the locating ribs 23 are inserted into the locating holes 30A formed on the back side of the control board 17 as shown in FIG. 5, and the L-shaped locking nail 27 formed on the clamper supporting portion 22 is hooked on the locking hole 31A to fasten the screws 32 put through the insertion holes 33A of the control board 17 in the screw holes 26 formed on the locating ribs 23 in the state of having the control board 17 positioned against the frame 18 so as to fix the control board 17 on the frame 18. Thus, it is possible to change the mounting position of the control board 17 on the frame 18 by selecting either the locating holes 30 or 30A and the locking holes 31 or 31A against the locating pins 25 and the locking nail 27 to fit the size of the housing 1 in the depth direction so as to put the output terminal 35 mounted on the control board 17 in secure contact with the backplane 3 of the housing 1. It is also possible to change the mounting position of the control board 17 on the frame 18 simply and facilitate mounting work just by selecting either the locating holes 30 or 30A and the locking holes 31 or 31A against the locating pins 25 and the locking nail 27. Furthermore, even in the case where the depth dimension of the housing 1 is different depending on the specification of the destination, it is possible to render the control board 17 for controlling the optical disk drive unit 15 common. Therefore, it is excellent in versatility and capable of reducing manufacturing cost because of the common components.

The present invention was described in detail above. However, the present invention is not limited to the embodiment but capable of various deformed embodiments within the subject matter thereof. For instance, the embodiment showed the composite video recording and reproducing apparatus comprising both the optical disk drive unit and video cassette drive unit. However, it does not necessarily have to comprise the optical disk drive unit and video cassette drive unit but may be the recording and reproducing apparatus comprising a stand-alone optical disk drive unit. Furthermore, a positioning structure of the control board against the frame is not limited to the embodiment but may be selected as appropriate. It also showed an example of providing two sets of the locating holes 30, 30A and locking holes 31, 31A as the engagement receiving portion. However, more than two sets may be provided. Furthermore, the forms and positions of the engagement portion and the engagement receiving portion are not limited to the embodiment but may be selected as appropriate.

The video recording and reproducing device according to claim 1 of the present invention is the one for housing at least an optical disk drive unit and a control board of the optical disk drive unit in a housing, placing the control board horizontally on a top surface of a frame of the optical disk drive unit and engaging an engagement receiving portion formed on the control board with an engagement portion formed on the frame to position the control board against the frame, in which the control board is provided with multiple sets of engagement receiving portions alongside with spacing forward and backward so that a mounting position of the control board on the frame can be changed by selecting one of the multiple engagement receiving portions and engaging it with the engagement portion. Therefore, it is possible to change the mounting position of the control board mounted on the frame forward and backward simply just by changing the position of the engagement receiving portion formed on the control board against the engagement portion formed on the frame.

The video recording and reproducing device according to claim 2 of the present invention is the one according to claim 1, in which an output terminal is connected to a back end portion of the control board and the engagement receiving portion of the control board for the engagement portion of the frame is selected so that the output terminal can contact backplanes of multiple housings of different depth dimensions. Therefore, it is possible to select the engagement receiving portion formed on the control board against the engagement portion formed on the frame forward or backward to fit the depth dimension of the housing so as to lead the output terminal fixed on the back end portion of the control board outside in secure contact with the backplane of the housing irrespective of the depth dimension of the housing.

The video recording and reproducing device according to claim 3 of the present invention is the one according to claim 1 or 2, in which the frame comprises a pair of right and left side wall portions and a clamper supporting portion installed between upper ends of the side wall portions, a locating rib with a screw hall and a locating pin is projected and formed on the top surface of the frame, a locking nail is formed on the clamper supporting portion, and a locating hole and a locking hole engageable with the locating pin and the locking nail are formed on the control board so as to configure the engagement portion with the locking nail and locating rib and configure the engagement receiving portion with the locating hole and locking hole. Therefore, it is possible to change the mounting position of the control board against the frame forward and backward just by displacing the locating hole and locking hole to be engaged with the locating pin and locking nail formed on the frame forward and backward.

The video recording and reproducing device according to claim 4 of the present invention is the one according to any one of claims 1 to 3, in which the optical disk drive unit and a video cassette drive unit are housed in the housing. Therefore, even in the case where the depth dimension of the housing is different depending on the specifications of the destination of export, however, it is possible to render the control board of the optical disk drive unit common just by changing the mounting position of the control board against the frame forward and backward.

## Claims

1. A video recording and reproducing device for housing at least an optical disk drive unit and a control board of the optical disk drive unit in a housing, placing the control board horizontally on a top surface of a frame of the optical disk drive unit and engaging an engagement receiving portion formed on the control board with an engagement portion formed on the frame to position the control board against the frame, **characterized in that** the control board is provided with multiple sets of engagement receiving portions alongside with spacing forward and backward so that a mounting position of the control board on the frame can be changed by selecting one of the multiple engagement receiving portions and engaging it with the engagement portion.

2. The video recording and reproducing device according to claim 1, **characterized in that** an output terminal is connected to a back end portion of the control board and the engagement receiving portion of the control board for the engagement portion of the frame is selected so that the output terminal can contact backplanes of multiple housings of different depth dimensions.

3. The video recording and reproducing device according to claim 1 or 2, **characterized in that** the frame comprises a pair of right and left side wall portions and a clamper supporting portion installed between upper ends of the side wall portions, a locating rib with a screw hall and a locating pin is projected and formed as the engagement portion on the top surface of the frame, a locking nail is formed on the clamper supporting portion, and a locating hole and a locking hole engageable with the locating pin and the locking nail are formed as the engagement receiving portion on the control board.

4. The video recording and reproducing device according to any one of claims 1 to 3, **characterized in that** the optical disk drive unit and a video cassette drive unit are housed in the housing.
